# EUROPEAN PATENT APPLICATION

(11) **EP 3 327 614 A1**
(43) Date of publication of application: **30.05.2018**
(21) Application number: 16856729.5
(22) Date of filing: 05.08.2016
(51) Int. Cl.: G06K 9/00

(54) **FINGERPRINT COLLECTION METHOD, APPARATUS, AND TERMINAL**

(30) Priority: 19.10.2015 CN 201510679998
(71) Applicant: Guangdong OPPO Mobile Telecommunications Corp., Ltd., Guangdong 523860 (CN)
(72) Inventor: ZHANG, Qiang, Dongguan Guangdong 523860 (CN); WANG, Lizhong, Dongguan Guangdong 523860 (CN); ZHOU, Haitao, Dongguan Guangdong 523860 (CN); JIANG, Kui, Dongguan Guangdong 523860 (CN); HE, Wei, Dongguan Guangdong 523860 (CN)
(74) Representative: Johnson, Richard Alan
(86) International application number: PCT/CN2016/093753
(87) International publication number: WO 2017/067294

(57) **Abstract**

A fingerprint collecting method and apparatus, and a terminal are provided. The method includes the following. A damaged sensing unit among a plurality of sensing units contained in a fingerprint sensor is determined. When a fingerprint collecting event is detected, the plurality of sensing units are used to collect a fingerprint image, and a fingerprint image value collected by the damaged sensing unit is set to a random image value to form a fingerprint image collected by the fingerprint sensor.

## Description

### CROSS REFERENCE TO RELATED APPLICATIONS

This application claims priority to Chinese Patent Application No. 201510679998.7, filed on Oct. 19, 2015, and entitled "FINGERPRINT COLLECTING METHOD AND APPARATUS", the disclosure of which is hereby incorporated by reference in its entirety.

### TECHNICAL FIELD

The present disclosure relates to the field of smart terminal, and particularly to a fingerprint collecting method and apparatus, and a terminal.

### BACKGROUND

Fingerprints are ridges formed by uneven portions of epidermis on fingers. Features of ridges of the fingerprints are nearly unique and difficult to alter; therefore, features of the fingerprints are often used to identify one's identity (ID). A fingerprint sensor is a sensor that identifies a user ID through fingerprints.

For capacitive fingerprint sensors, when the fingerprint sensor is shipped, due to a manufacturing process, the fingerprint sensor will have some damaged sensing units among a plurality of sensing units contained in the fingerprint sensor. Meanwhile, in the process of using, the number of damaged sensing units may increase as a result of static electricity or other external conditions. Fingerprint image values collected by those damaged sensing unit at different time points are very similar, resulting in an increase of the number of damaged sensing units, which in turn leads to an increase of fingerprint false recognition rate.

### SUMMARY

According to this disclosure, a fingerprint collecting method and apparatus, and a terminal are provided, which can reduce the similarity of fingerprint image values collected by a damaged sensing unit at different times.

According to a first aspect of the present disclosure, there is provided a fingerprint collecting method, which includes the following.

A damaged sensing unit among a plurality of sensing units contained in a fingerprint sensor is determined.

The plurality of sensing units are used to collect a fingerprint image when a fingerprint collecting event is detected, and a fingerprint image value collected by the damaged sensing unit is set to random image value to form a fingerprint image collected by the fingerprint sensor.

According to a second aspect of the present disclosure, a fingerprint collecting apparatus is provided. The apparatus includes a damaged-unit determining module and a fingerprint-image collecting module.

The damaged-unit determining module is configured to determine a damaged sensing unit among a plurality of sensing units contained in a fingerprint sensor.

The fingerprint-image collecting module is configured to use the plurality of sensing units to collect a fingerprint image when a fingerprint collecting event is detected, and set a fingerprint image value collected by the damaged sensing unit to a random image value to form a fingerprint image collected by the fingerprint sensor.

According to a third aspect of the disclosure, there is provided a terminal, which includes a fingerprint sensor and a fingerprint collecting apparatus coupled to the fingerprint sensor. The fingerprint collecting apparatus includes a damaged-unit determining module and a fingerprint-image collecting module.

The damaged-unit determining module is configured to determine a damaged sensing unit among a plurality of sensing units contained in a fingerprint sensor.

The fingerprint-image collecting module is configured to use the plurality of sensing units to collect a fingerprint image when a fingerprint collecting event is detected, and set a fingerprint image value collected by the damaged sensing unit to a random image value to form a fingerprint image collected by the fingerprint sensor.

### BRIEF DESCRIPTION OF THE DRAWINGS

To illustrate the technical solutions embodied by the embodiments of the present disclosure or by the related art more clearly, the following briefly introduces the accompanying drawings required for describing the embodiments or the related art. Apparently, the accompanying drawings in the following description merely illustrate some embodiments of the present disclosure. Those of ordinary skill in the art may also obtain other drawings based on these accompanying drawings without creative efforts.

FIG.1 is a flow diagram illustrating a fingerprint collecting method according to a first embodiment of the disclosure.

FIG.2 is a flow diagram illustrating a fingerprint collecting method according to a second embodiment of the disclosure.

FIG.3 is a flow diagram illustrating a fingerprint collecting method according to a third embodiment of the disclosure.

FIG.4 is a block diagram illustrating a fingerprint collecting apparatus according to a fourth embodiment of the disclosure.

FIG.5 is a structural diagram illustrating a terminal according to a fifth embodiment of the disclosure.

### DETAILED DESCRIPTION OF ILLUSTRATED EMBODIMENTS

The present disclosure will be further described in detail below with reference to the accompanying drawings and embodiments. It should be understood that the exemplary embodiments described herein are merely used to explain rather than limit the present disclosure. In addition, it should also be noted that, for the convenience of description, only some rather than all structures related to the present disclosure are illustrated in the accompanying drawings.

According to embodiments of the disclosure, there is provided a fingerprint collecting method, which includes the following.

A damaged sensing unit among a plurality of sensing units contained in a fingerprint sensor is determined.

The plurality of sensing units are used to collect a fingerprint image when a fingerprint collecting event is detected, and a fingerprint image value collected by the damaged sensing unit is set to a random image value to form a fingerprint image collected by the fingerprint sensor.

As one implementation, the damaged sensing unit among the plurality of sensing units contained in the fingerprint sensor is determined as follows. A sensing unit that collects the same fingerprint image value for multiple times is determined as the damaged sensing unit among the plurality of sensing units.

As one implementation, the fingerprint image value collected by the damaged sensing unit can be set to the random image value as follows. Location information of the damaged sensing unit is acquired; the fingerprint image value collected by the damaged sensing unit is set to the random image value according to the location information of the damaged sensing unit.

As one implementation, the location information of the damaged sensing unit may include at least one of number information and coordinate information of the damaged sensing unit.

As one implementation, the fingerprint collecting method may further include the following after setting the fingerprint image value collected by the damaged sensing unit to the random image value. A preset fingerprint template image can be used to identify the fingerprint image collected by the fingerprint sensor to obtain a fingerprint identification result.

As one implementation, the fingerprint image value collected by the damaged sensing unit is set to the random image value according to the location information of the damaged sensing unit as follows. A distribution of the damaged sensing unit can be determined through at least one of the number information and the coordinate information of the damaged sensing unit. A preset random-image-value generating scheme is selected according to the distribution to generate the random image value, and then the fingerprint image value collected by the damaged sensing unit can be replaced with the random image value.

As one implementation, the fingerprint collecting method may further include the following after setting the fingerprint image value collected by damaged sensing unit to the random image value. The fingerprint image collected by the fingerprint sensor is stored as an enrolled fingerprint.

As one implementation, the fingerprint image value is a gray-scale value; the random image value is in a range of 0-255.

According to implementations of the disclosure, there is provided a fingerprint collecting apparatus, which includes a damaged-unit determining module and a fingerprint-image collecting module.

The damaged-unit determining module is configured to determine a damaged sensing unit among a plurality of sensing units contained in a fingerprint sensor.

The fingerprint-image collecting module is configured to use the plurality of sensing units to collect a fingerprint image when a fingerprint collecting event is detected, and set a fingerprint image value collected by the damaged sensing unit to a random image value to form a fingerprint image collected by the fingerprint sensor.

As one implementation, the damaged-unit determining module is configured to determine a sensing unit that collects the same fingerprint image value for multiple times to be the damaged sensing unit among the plurality of sensing units.

As one implementation, the fingerprint-image collecting module may include a location-information acquiring unit and a random-value filling unit.

The location-information acquiring unit is configured to acquire location information of the damaged sensing unit.

The random-value filling unit is configured to set the fingerprint image value collected by the damaged sensing unit to the random image value according to the location information of the damaged sensing unit.

As one implementation, the location information of the damaged sensing unit may include at least one of number information and coordinate information of the damaged sensing unit.

As one implementation, the fingerprint collecting apparatus may include an image identifying module. The image identifying module is configured to use a preset fingerprint template image to identify the fingerprint image collected by the fingerprint sensor to obtain a fingerprint identification result, after the random-value filling unit sets the fingerprint image value collected by the damaged sensing unit to the random image value.

As one implementation, the random-value filling unit is configured to determine a distribution of the damaged sensing unit through at least one of the number information (such as ID, all the sensing unit may be numbered in advance and each sensing unit has a unique number) and the coordinate information of the damaged sensing unit, select a preset random-image-value generating scheme according to the distribution to generate the random image value, and replace the fingerprint image value collected by the damaged sensing unit with the random image value.

According to implementations of the disclosure, there is provided a terminal, which includes a fingerprint sensor and a fingerprint collecting apparatus coupled with the fingerprint sensor.

The fingerprint collecting apparatus may include a damaged-unit determining module and a fingerprint-image collecting module.

The damaged-unit determining module is configured to determine a damaged sensing unit among a plurality of sensing units contained in the fingerprint sensor.

The fingerprint-image collecting module is configured to use the plurality of sensing units to collect a fingerprint image when a fingerprint collecting event is detected, and set a fingerprint image value collected by the damaged sensing unit to a random image value to form a fingerprint image collected by the fingerprint sensor.

As one implementation, the damaged-unit determining module is configured to determine a sensing unit that collects the same fingerprint image value for multiple times to be the damaged sensing unit among the plurality of sensing units.

As one implementation, the fingerprint-image collecting module may include a location-information acquiring unit and a random-value filling unit.

The location-information acquiring unit is configured to acquire location information of the damaged sensing unit.

The random-value filling unit is configured to set the fingerprint image value collected by the damaged sensing unit to the random image value according to the location information of the damaged sensing unit.

As one implementation, the location information of the damaged sensing unit may include at least one of number information and coordinate information of the damaged sensing unit.

As one implementation, the fingerprint collecting apparatus may further include an image identifying module, configured to use a preset fingerprint template image to identify the fingerprint image collected by the fingerprint sensor to obtain a fingerprint identification result, after the random-value filling unit sets the fingerprint image value collected by the damaged sensing unit to the random image value.

As one implementation, the random-value filling unit is configured to determine a distribution of the damaged sensing unit through at least one of the number information and the coordinate information of the damaged sensing unit, select a preset random-image-value generating scheme according to the distribution to generate the random image value, and replace the fingerprint image value collected by the damaged sensing unit with the random image value.

### First embodiment

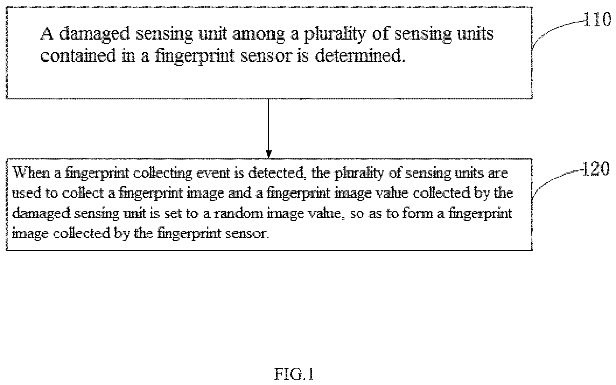

FIG.1 is a flow diagram illustrating a fingerprint collecting method according to a first embodiment of the disclosure. This embodiment can be applied to a situation where a user wants to collect a fingerprint image. The method can be performed by a fingerprint collecting apparatus. The apparatus may be built-into a smart terminal as a part of the smart terminal. The smart terminal can be an electronic terminal such as a smart phone and a tablet PC. As illustrated in FIG.1, the method includes the following.

At block 110, a damaged sensing unit among a plurality of sensing units contained in a fingerprint sensor is determined.

The fingerprint sensor may be a capacitive fingerprint sensor. The capacitive fingerprint sensor works as follows. A finger is attached to a "panel" integrated with thousands of semiconductor devices to form one side of a capacitor. Since the finger has an uneven surface, the actual distance between a convex point and the panel is not the same as that between a concave point and the panel, and thus capacitance values formed are different.

The capacitive fingerprint sensor may contain a plurality of sensing units, for example, 160 × 160 sensing units. According to the difference of capacitance values of ridges and valleys of a fingerprint on the capacitive sensing units, positions of ridges and valleys can be determined. The operating process is as follows. A capacitive sensing unit at each pixel can be charged to a reference voltage, when a finger touches a capacitive fingerprint sensor, the sensing unit discharges. Since ridges are convex while valleys are concave and capacitance values vary with the distance, different capacitance values may be formed at ridges and valleys. The discharging speed for the ridges and the valleys is also different. The sensing unit at ridges has a high capacitance and discharges slowly; the sensing unit at valleys has a low capacitance and discharges quickly. As a result, positions of ridges and valleys can be detected according to the rate of discharge, so as to form fingerprint image data.

When shipped from the factory, due to a manufacturing process, a fingerprint sensor may have some damaged sensing units among a plurality of sensing units contained in the sensor. The damaged sensing unit collects the same image every time. The impact on fingerprint image is small when the number of damaged sensing units does not exceed a preset standard value. However, as the user uses the fingerprint sensor, the number of damaged sensing units will increase with the influence of static electricity or other external conditions. When the number of damaged sensing units exceeds the preset standard value, as the number of damaged sensing units increase, the fingerprint image recognition rate will decrease. The preset standard value may be 11 for example and this disclosure is not limited thereto.

Some capacitive fingerprint sensors come with a function of detecting damaged sensing units. For example, the fingerprint sensor can be set to a full-white or full-black mode. In the full-white mode, sensing units corresponding to non-white collected pixels are damaged sensing units. In the full-black mode, sensing units corresponding to non-black collected pixels are damaged sensing units.

For those fingerprint sensors that do not have the function of detecting damaged sensing units, whether a pixel in an image is changed each time the fingerprint sensor is used to collect the fingerprint image can be determined, so as to determine whether a sensing unit corresponding to the pixel is damaged.

At block 120, when a fingerprint collecting event is detected, the plurality of sensing units are used to collect a fingerprint image and a fingerprint image value collected by the damaged sensing unit is set to a random image value, so as to form a fingerprint image collected by the fingerprint sensor.

The fingerprint image value can be a gray-scale value. The random image value can be in a range of 0-255. The fingerprint image value collected by the damaged sensing unit is set to the random image value as follows. After the fingerprint sensor collects the fingerprint image, the fingerprint image value at a position corresponding to the damaged sensing unit is discarded and then replaced with the random image value between 0-255, therefore, a new fingerprint image is formed after the replacement. By setting the fingerprint image value collected by the damaged sensing unit to the random image value, for the damaged sensing unit, the fingerprint image values collected will be different.

According to the technical solutions of the disclosure, when the fingerprint collecting event is detected, the plurality of sensing units are used to collect the fingerprint image and the fingerprint image value collected by the damaged sensing unit is set to the random image value, so as to form the fingerprint image collected by the fingerprint sensor. In this way, it is possible to reduce the similarity of fingerprint image values collected by the damaged sensing unit at different times, and solve the problem that the fingerprint image values collected by the damaged sensing unit contained in the fingerprint sensor at different times have high similarity.

### Second embodiment

The second embodiment provides a fingerprint collecting method on the basis of the first embodiment. In this method, a fingerprint image value collected by a damaged sensing unit is set to a random image value as follows. Location information of the damaged sensing unit is acquired and then the fingerprint image value collected by the damaged sensing unit is set to the random image value according to the location information of the damaged sensing unit.

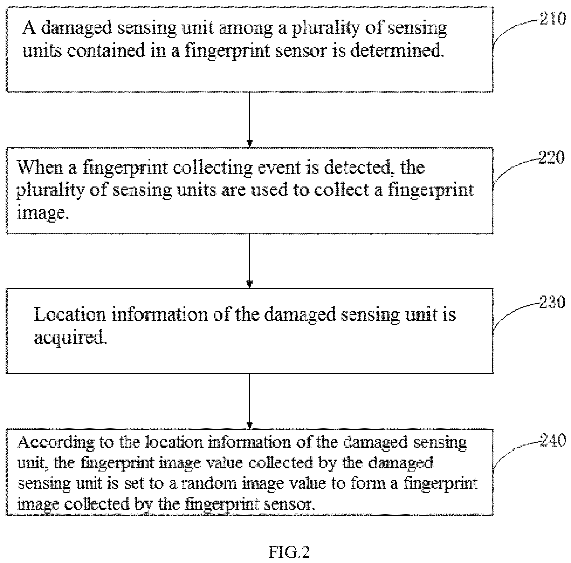

FIG.2 is a flow diagram illustrating a fingerprint collecting method according to a second embodiment of the disclosure. As illustrated in FIG.2, the method includes the following operations.

At block 210, a damaged sensing unit among a plurality of sensing units contained in a fingerprint sensor is determined.

In one implementation, the damaged sensing unit among a plurality of sensing units contained in a fingerprint sensor can be determined as follows. A sensing unit that collects the same fingerprint image value for multiple times is determined as the damaged sensing unit among the plurality of sensing units.

To be specific, when collecting different fingerprint images, if fingerprint image values collected by a certain sensing unit for multiple times are the same, it indicates that the sensing unit cannot distinguish between different fingerprint images, thereby this sensing unit can be determined as a damaged sensing unit.

At block 220, when a fingerprint collecting event is detected, the plurality of sensing units are used to collect a fingerprint image.

At block 230, location information of the damaged sensing unit is acquired.

It should be noted that the operation at block 230 can be performed together with that at block 210, that is, the location information and/or amount information of the damaged sensing unit can be determined during determining the damaged sensing unit.

In one implementation, the location information of the damaged sensing unit includes at least one of number information and coordinate information of the damaged sensing unit.

At block 240, according to the location information of the damaged sensing unit, the fingerprint image value collected by the damaged sensing unit is set to a random image value to form a fingerprint image collected by the fingerprint sensor.

In particular, a distribution of the damaged sensing unit can be determined through the number information and/or the coordinate information of the damaged sensing unit, then a preset random-image-value generating scheme can be selected according to the distribution to generate the random image value to replace the fingerprint image value.

After setting the fingerprint image value collected by the damaged sensing unit to the random image value, the method may further includes the following. A preset fingerprint template image is used to identify the fingerprint image collected by the fingerprint sensor, to obtain a fingerprint identification result.

The term "fingerprint" used herein refers to uneven ridge lines on the epidermis at tail ends of fingers of human beings. The ridge lines are arrayed regularly to form different ridge patterns. Starting points, ending points, combining points, and bifurcation points of the ridge lines are known as minutiae feature points of the fingerprint. Fingerprint recognition refers to comparing minutiae feature points of different fingerprints for identification.

In particular, a rough comparison can be performed according to ridge patterns of fingerprints, and a precise comparison can be performed by using fingerprint morphology and minutiae features. The precise comparison can be achieved as follows. Pixel feature value of target pixels in a collected fingerprint image is first calculated; then pixel feature values of pixels in a preset fingerprint template image are acquired. The pixel feature value of each target pixel in the collected fingerprint image is compared with the pixel feature value of each corresponding pixel in the preset fingerprint template image to obtain the similarity between images. According to the similarity, a fingerprint identification result, which includes identification success or identification failure, can be generated.

According to the technical solutions of the embodiments, the location information of the damaged sensing unit is acquired. According to the location information of the damaged sensing unit, the fingerprint image value collected by the damaged sensing unit is set to the random image value to form the fingerprint image collected by the fingerprint sensor. Then the preset fingerprint template image is used to identify the fingerprint image collected by the fingerprint sensor to obtain the fingerprint identification result. In this way, similarity of fingerprint image values collected by the damaged sensing unit at different times can be reduced, and fingerprint false identification rate can be decreased. Therefore, it is possible to solve the problem that the fingerprint false identification rate increases with the number of damaged sensing units, which is caused by high similarity of the fingerprint image values collected by the damaged sensing unit contained in the fingerprint sensor at different times.

### Third embodiment

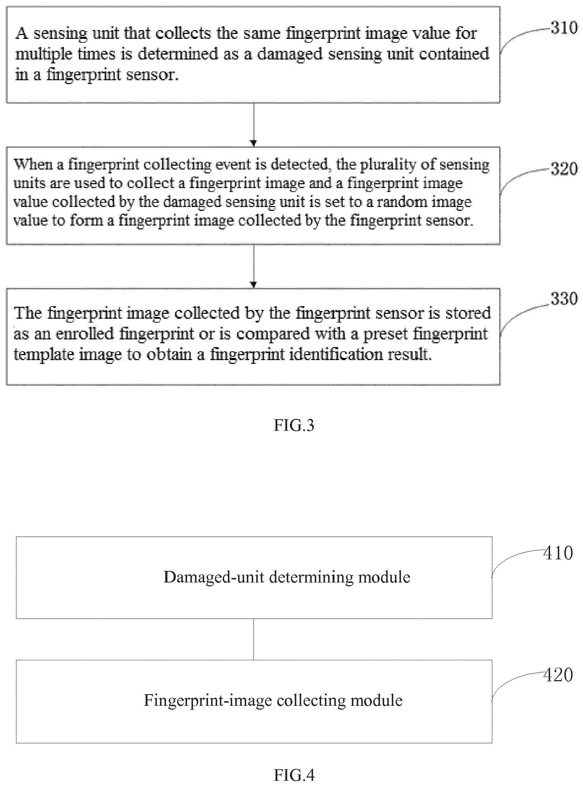

Based on the above embodiments, an example of a fingerprint collecting method is provided. FIG.3 is a flow diagram illustrating a fingerprint collecting method according to a third embodiment. As illustrated in FIG.3, the method includes the following operations.

At block 310, a sensing unit that collects the same fingerprint image value for multiple times is determined as a damaged sensing unit contained in a fingerprint sensor.

In addition, for a fingerprint sensor comes with a damaged sensing-unit detecting function, it is possible to determine the damaged sensing unit contained in the fingerprint sensor with aid of this function.

At block 320, when a fingerprint collecting event is detected, the plurality of sensing units are used to collect a fingerprint image and a fingerprint image value collected by the damaged sensing unit is set to a random image value to form a fingerprint image collected by the fingerprint sensor.

In one implementation, when detect that a finger presses the fingerprint sensor, the sensing units of the fingerprint sensor can be used to collect a fingerprint image.

At block 330, the fingerprint image collected by the fingerprint sensor is stored as an enrolled fingerprint or is compared with a preset fingerprint template image to obtain a fingerprint identification result.

In one implementation, when the fingerprint sensor is in an enrolling mode, a fingerprint image collected by the fingerprint sensor is stored as an enrolled fingerprint; when the fingerprint sensor is in an identification mode, the fingerprint image collected by the fingerprint sensor is compared with the preset fingerprint template image, to obtain a fingerprint identification result.

According to the technical schemes, the sensing unit that collects the same fingerprint image value for multiple times is determined as the damaged sensing unit among the plurality of sensing units. The fingerprint image value collected by the damaged sensing unit is set to the random image value to form the fingerprint image collected by the fingerprint sensor. Then the fingerprint image collected by the fingerprint sensor is stored as the enrolled fingerprint or is compared with the preset fingerprint template image to obtain the fingerprint identification result. As a result, similarity of fingerprint image values collected by the damaged sensing unit at different times can be reduced, and fingerprint false identification rate can be decreased. Therefore, it is possible to solve the problem that the fingerprint false identification rate increases with the number of damaged sensing units, which is caused by high similarity of the fingerprint image values collected by the damaged sensing unit contained in the fingerprint sensor at different times.

### Fourth embodiment

FIG.4 is a structural diagram illustrating a fingerprint collecting apparatus according to a fourth embodiment of the disclosure. As illustrated in FIG.4, the apparatus includes a damaged-unit determining module 410 and a fingerprint-image collecting module 420.

The damaged-unit determining module 410 is configured to determine a damaged sensing unit among a plurality of sensing units contained in a fingerprint sensor.

The fingerprint-image collecting module 420 is configured to use the plurality of sensing units to collect a fingerprint image when a fingerprint collecting event is detected, and set a fingerprint image value collected by the damaged sensing unit to a random image value to form a fingerprint image collected by the fingerprint sensor.

Further, the damaged-unit determining module 410 is configured to determine a sensing unit that collects the same fingerprint image value for multiple times to be the damaged sensing unit among the plurality of sensing units.

Further, the fingerprint-image collecting module 420 includes a location-information acquiring unit and a random-value filling unit.

The location-information acquiring unit is configured to acquire location information of the damaged sensing unit.

The random-value filling unit is configured to set the fingerprint image value collected by the damaged sensing unit to the random image value according to the location information of the damaged sensing unit.

Further, the location information of the damaged sensing unit may include number information and/or coordinate information of the damaged sensing unit.

In one implementation, the apparatus further includes an image identifying module. The image identifying module is configured to use a preset fingerprint template image to identify the fingerprint image collected by the fingerprint sensor to obtain a fingerprint identification result, after the random-value filling unit sets the fingerprint image value collected by the damaged sensing unit to the random image value.

The fingerprint collecting apparatus provided in this embodiment belongs to the same inventive concept as the fingerprint collecting method provided in any of the embodiments of the present disclosure and can perform the method. The fingerprint collecting apparatus has corresponding function modules for implementing the fingerprint collecting method and can achieve corresponding advantageous effects. For technical details not described in detail in this embodiment, reference may be made to the fingerprint collecting method of any embodiment of the present disclosure.

### Fifth embodiment

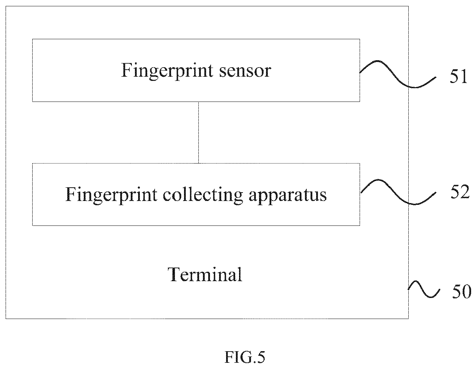

FIG.5 is a schematic structural diagram illustrating a terminal according to a fifth embodiment of the disclosure. The terminal 50 includes a fingerprint sensor 51 and a fingerprint collecting apparatus 52 provided in any embodiment of the disclosure.

The terminal may be a mobile phone, a tablet PC or other devices that users hold. The present disclosure is not limited thereto.

In one implementation, there is provided a terminal. The terminal includes a fingerprint sensor 51 and a fingerprint collecting apparatus 52 coupled to the fingerprint sensor 51.

The fingerprint collecting apparatus 52 includes a damaged-unit determining module and a fingerprint-image collecting module.

The damaged-unit determining module is configured to determine a damaged sensing unit among a plurality of sensing units contained in the fingerprint sensor.

The fingerprint-image collecting module is configured to use the plurality of sensing units to collect a fingerprint image when a fingerprint collecting event is detected, and set a fingerprint image value collected by the damaged sensing unit to a random image value to form a fingerprint image collected by the fingerprint sensor.

In one implementation, the damaged-unit determining module is configured to determine a sensing unit that collects the same fingerprint image value for multiple times to the damaged sensing unit among the plurality of sensing units.

In one implementation, the fingerprint-image collecting module may include a location-information acquiring unit and a random-value filling unit.

The location-information acquiring unit is configured to acquire location information of the damaged sensing unit.

The random-value filling unit is configured to set the fingerprint image value collected by the damaged sensing unit to be the random image value according to the location information of the damaged sensing unit.

In an implementation, the location information of the damaged sensing unit may include at least one of number information and coordinate information of the damaged sensing unit.

In one implementation, the fingerprint collecting apparatus 52 may further include an image identifying module. The image identifying module is configured to use a preset fingerprint template image to identify the fingerprint image collected by the fingerprint sensor to obtain a fingerprint identification result, after the random-value filling unit sets the fingerprint image value collected by the damaged sensing unit to the random image value.

In one implementation, the random-value filling unit is configured to determine a distribution of the damaged sensing unit through at least one of the number information and the coordinate information of the damaged sensing unit, select a preset random-image-value generating scheme according to the distribution to generate the random image value, and replace the fingerprint image value collected by the damaged sensing unit with the random image value.

Furthermore, the terminal according to the embodiment may further include a radio frequency (RF) circuit, a memory including at least one computer-readable storage medium, an input unit, a display unit, a sensor, an audio-frequency circuit, a wireless fidelity (WiFi) module, a processor including at least one processing core, a power supply, and other components. Optionally, the fingerprint collecting apparatus provided in this embodiment can be integrated into a processor.

According to the terminal of the embodiment, the sensing unit that collects the same fingerprint image value for multiple times is determined to be the damaged sensing unit among the plurality of sensing units. Then the fingerprint image value collected by the damage sensing units is set to the random image value to form the fingerprint image collected by the fingerprint sensor. Meanwhile, the fingerprint image collected by the fingerprint sensor is stored as the enrolled fingerprint or compared with the preset fingerprint template image to obtain the fingerprint identification result. Therefore, similarity of fingerprint image values collected by the damaged sensing unit at different times can be reduced, and fingerprint false identification rate can be decreased. Therefore, it is possible to solve the problem that the fingerprint false identification rate increases with the number of damaged sensing units, which is caused by high similarity of the fingerprint image values collected by the damaged sensing unit contained in the fingerprint sensor at different times.

It should be noted that those of ordinary skill in the art may understand that all or part of the steps in the methods described in the foregoing embodiments may be implemented by a program instructing relevant hardware. The program may be stored in a computer-readable storage medium, such as stored in a memory of a terminal and executed by at least one processor within the terminal. When executed, the fingerprint collecting method can be performed. The storage medium may include a read only memory (ROM), a random access memory (RAM), a magnetic disk, an optical disk, or the like.

It should be noted that the above is merely some embodiments of the present disclosure and applied technical principles. Those skilled in the art should understand that the present disclosure is not limited to the embodiments described herein. Various obvious changes, re-modifications, and substitutions can be made by those skilled in the art without departing from the scope of the present disclosure. Therefore, although the present disclosure has been described in detail by way of the above embodiments, the present disclosure is not limited to the above embodiments and other equivalent embodiments may be included without departing from the concept of the present disclosure. However, the scope of the present disclosure shall be subject to the scope of the appended claims.

## Claims

1. A fingerprint collecting method, comprising:
determining a damaged sensing unit among a plurality of sensing units contained in a fingerprint sensor; and
using the plurality of sensing units to collect a fingerprint image when a fingerprint collecting event is detected, and setting a fingerprint image value collected by the damaged sensing unit to a random image value to form a fingerprint image collected by the fingerprint sensor.

2. The method of claim 1, wherein the determining a damaged sensing unit among a plurality of sensing units contained in a fingerprint sensor comprises:
determining a sensing unit that collects the same fingerprint image value for multiple times to be the damaged sensing unit among the plurality of sensing units.

3. The method of claim 1, wherein the setting a fingerprint image value collected by the damaged sensing unit to a random image value comprises:
acquiring location information of the damaged sensing unit; and
setting the fingerprint image value collected by the damaged sensing unit to the random image value according to the location information of the damaged sensing unit.

4. The method of claim 3, wherein the location information of the damaged sensing unit comprises at least one of number information and coordinate information of the damaged sensing unit.

5. The method of claim 1, wherein the method further comprises the follows after the setting a fingerprint image value collected by the damaged sensing unit to a random image value:
using a preset fingerprint template image to identify the fingerprint image collected by the fingerprint sensor, to obtain a fingerprint identification result.

6. The method of claim 4, wherein the setting the fingerprint image value collected by the damaged sensing unit to the random image value according to the location information of the damaged sensing unit comprises:
determining a distribution of the damaged sensing unit through at least one of the number information and the coordinate information of the damaged sensing unit; and
selecting a preset random-image-value generating scheme according to the distribution to generate the random image value, and replacing the fingerprint image value collected by the damaged sensing unit with the random image value.

7. The method of claim 1, wherein the method further comprises the follows after the setting a fingerprint image value collected by the damaged sensing unit to a random image value:
storing the fingerprint image collected by the fingerprint sensor as an enrolled fingerprint.

8. The method of claim 1, wherein the fingerprint image value comprises a gray-scale value and the random image value is in a range of 0-255.

9. A fingerprint collecting apparatus, comprising:
a damaged-unit determining module, configured to determine a damaged sensing unit among a plurality of sensing units contained in a fingerprint sensor; and
a fingerprint-image collecting module, configured to use the plurality of sensing units to collect a fingerprint image when a fingerprint collecting event is detected, and set a fingerprint image value collected by the damaged sensing unit to a random image value to form a fingerprint image collected by the fingerprint sensor.

10. The apparatus of claim 9, wherein the damaged-unit determining module is configured to:
determine a sensing unit that collects the same fingerprint image value for multiple times to be the damaged sensing unit among the plurality of sensing units.

11. The apparatus of claim 9, wherein the fingerprint-image collecting module comprises:
a location-information acquiring unit, configured to acquire location information of the damaged sensing unit; and
a random-value filling unit, configured to set the fingerprint image value collected by the damaged sensing unit to the random image value according to the location information of the damaged sensing unit.

12. The apparatus of claim 11, wherein the location information of the damaged sensing unit comprises at least one of number information and coordinate information of the damaged sensing unit.

13. The apparatus of claim 9, wherein the apparatus further comprises:
an image identifying module, configured to use a preset fingerprint template image to identify the fingerprint image collected by the fingerprint sensor to obtain a fingerprint identification result, after the fingerprint-image collecting module sets the fingerprint image value collected by the damaged sensing unit to the random image value.

14. The apparatus of claim 12, wherein the random-value filling unit is configured to:
determine a distribution of the damaged sensing unit through at least one of the number information and the coordinate information of the damaged sensing unit; and
select a preset random-image-value generating scheme according to the distribution to generate the random image value, and replace the fingerprint image value collected by the damaged sensing unit with the random image value.

15. A terminal, comprising:
a fingerprint sensor; and
a fingerprint collecting apparatus coupled to the fingerprint sensor;
the fingerprint collecting apparatus comprising:
a damaged-unit determining module, configured to determine a damaged sensing unit among a plurality of sensing units contained in the fingerprint sensor; and
a fingerprint-image collecting module, configured to use the plurality of sensing units to collect a fingerprint image when a fingerprint collecting event is detected, and set a fingerprint image value collected by the damaged sensing unit to a random image value to form a fingerprint image collected by the fingerprint sensor.

16. The terminal of claim 15, wherein the damaged-unit determining module is configured to:
determine a sensing unit that collects the same fingerprint image value for multiple times to be the damaged sensing unit among the plurality of sensing units.

17. The terminal of claim 15, wherein the fingerprint-image collecting module comprises:
a location-information acquiring unit, configured to acquire location information of the damaged sensing unit; and
a random-value filling unit, configured to set the fingerprint image value collected by the damaged sensing unit to the random image value according to the location information of the damaged sensing unit.

18. The terminal of claim 17, wherein the location information of the damaged sensing unit comprises at least one of number information and coordinate information of the damaged sensing unit.

19. The terminal of claim 15, wherein the fingerprint collecting apparatus further comprises:
an image identifying module, configured to use a preset fingerprint template image to identify the fingerprint image collected by the fingerprint sensor, to obtain a fingerprint identification result after the random-value filling unit sets the fingerprint image value collected by the damaged sensing unit to the random image value.

20. The terminal of claim 18, wherein the random-value filling unit is configured to:
determine a distribution of the damaged sensing unit through at least one of the number information and the coordinate information of the damaged sensing unit; and
select a preset random-image-value generating scheme according to the distribution to generate the random image value, and replace the fingerprint image value collected by the damaged sensing unit with the random image value.
